# EUROPEAN PATENT APPLICATION

(11) **EP 2 930 591 A2**
(43) Date of publication of application: **14.10.2015**
(21) Application number: 13787789.0
(22) Date of filing: 26.07.2013
(51) Int. Cl.: G06F 3/00

(54) **INTELLIGENT TERMINAL WITH BUILT-IN SCREENSHOT FUNCTION AND IMPLEMENTATION METHOD THEREOF**

(30) Priority: 10.12.2012 CN 201210526434
(71) Applicant: ZTE Corporation, Shenzhen, Guangdong 518057 (CN)
(72) Inventor: ZHU, Yong, Shenzhen Guangdong 518057 (CN); YU, Chaoyang, Shenzhen Guangdong 518057 (CN)
(74) Representative: Brevalex
(86) International application number: PCT/CN2013/080235
(87) International publication number: WO 2013/167084

(57) **Abstract**

Provided is a smart terminal with a built-in screenshot function, including a sensing module and a processing module. The sensing module is configured to sense a touch of a user to form a coordinate of a touch point, and send the formed coordinate of the touch point to the processing module. The processing module is configured to receive the coordinate of the touch point, and process the coordinate of the touch point to form a capture area and capture the capture area. In the meanwhile, a method for implementing a smart terminal with a built-in screenshot function is provided. By using a technical solution of the present disclosure, it is not necessary to remember a button combination or capture a screen content a full-screen display situation, thereby facilitating an operation of a user.

## Description

### TECHNICAL FIELD

The present disclosure relates to a screenshot technology of a smart terminal, and particularly to a smart terminal with a built-in screenshot function and an implementation method thereof.

### BACKGROUND

A smart terminal brings more convenience for a user compared with a traditional terminal. Generally, when using a smart terminal such as a smart phone, a user may capture a screen content (generally referring to an image) that the user is interested in, and then store or edit the screen content. At present, most smart mobile phones are provided with a built-in screenshot function. For example, a power button and a volume button of a smart mobile phone with an Android operating system need to be pressed simultaneously for a certain period of time (about 10 seconds) during a screenshot process, and a power button and a Home button of a smart mobile phone researched and developed by Apple Inc. need to be pressed simultaneously for a certain period of time (about 10 seconds). It is found that the built-in screenshot function of the smart mobile phones has disadvantages in two aspects:
1. when a user who does not use a screenshot function frequently wants to use the screenshot function, the user needs to repeatedly memorize a combination of two buttons to implement a screenshot while memory may go wrong, therefore, the method using a combination of two buttons is somewhat inconvenient for users who do not use the screenshot function frequently;
2. when a user captures a screen content of interest, the screen content is usually displayed by full screen, and the screen content of interest can be captured only based on full-screen display.

### SUMMARY

In view of this, the major purpose of embodiments of the present disclosure is to provide a smart terminal with a built-in screenshot function and an implementation method thereof. A button combination is not required, and a capture does not need to be performed based on full-screen display, thereby facilitating an operation of a user.

A technical solution of the present disclosure is implemented by the following way in order to achieve the purpose.

An embodiment of the present disclosure provides a smart terminal with a built-in screenshot function. The smart terminal includes a sensing module and a processing module, wherein
the sensing module is configured to sense a touch of a user to form a coordinate of a touch point, and send the coordinate of the touch point to the processing module; and
the processing module is configured to receive the coordinate of the touch point, and process the coordinate of the touch point to form a capture area and capture the capture area.

In the solution, a screen of the smart terminal may apply a capacitive touch screen.

In the solution, the processing module may be configured to receive coordinates of all touch points, and determine the capture area by comparing abscissa values and ordinate values of the coordinates of all touch points.

In the solution, the processing module may be configured to:
receive the coordinates of all touch points, compare the abscissa values and the ordinate values of the coordinates of all touch points, acquire a maximum abscissa value and a minimum abscissa value, as well as a maximum ordinate value and a minimum ordinate value in the coordinates of all touch points, subtract the minimum abscissa value from the maximum abscissa value to acquire a first difference value and subtract the minimum ordinate value from the maximum ordinate value to acquire a second difference value, wherein the capture area is a closed area enclosed by two line segments made according to a length equal to the first difference value and two line segments made according to a length equal to the second difference value, and the capture area is captured.

In the solution, capturing the capture area may include that the capture area is captured when a capture operation of a finger is detected.

An embodiment of the present disclosure further provides a method for implementing a smart terminal with a built-in screenshot function. The method includes that
a touch of a user is sensed to form a coordinate of a touch point; and
the coordinate of the touch point is processed to form a capture area and the capture area is captured.

In the solution, the operation that the coordinate of the touch point is processed may include that the capture area is determined by comparing abscissa values and ordinate values of coordinates of all touch points.

In the solution, the operation that the coordinate of the touch point is processed to form the capture area may include that:
the abscissa values and the ordinate values of the coordinates of all touch points are compared, a maximum abscissa value and a minimum abscissa value, as well as a maximum ordinate value and a minimum ordinate value in the coordinates of all touch points are acquired, the minimum abscissa value is subtracted from the maximum abscissa value to acquire a first difference value and the minimum ordinate value is subtracted from the maximum ordinate value to acquire a second difference value, wherein the capture area is a closed area enclosed by two line segments made according to a length equal to the first difference value and two line segments made according to a length equal to the second difference value.

In the solution, a screen of the smart terminal may apply a capacitive touch screen.

In the solution, the operation that the capture area is captured may include that the capture area is captured when a capture operation of a finger is detected.

According to a smart terminal with a built-in screenshot function and an implementation method thereof provided by the embodiments of the present disclosure, a user touches a screen content of interest, the smart terminal senses the touch, generates a coordinate of a touch point and processes the coordinate of the touch point to form a capture area to further capture the screen content that the user is interested in. By using the technical solution of the present disclosure, it is not necessary to remember a button combination or capture a screen content in a full-screen display situation, thereby facilitating an operation of a user.

### BRIEF DESCRIPTION OF THE DRAWINGS

Fig. 1 is a structural diagram of a smart terminal with a built-in screenshot function according to an embodiment of the present disclosure;
Fig. 2 (a) to (c) are schematic diagrams of a specific embodiment of the present disclosure; and
Fig. 3 is a schematic flowchart of a method for implementing a smart terminal with a built-in screenshot function according to an embodiment of the present disclosure.

### DETAILED DESCRIPTION

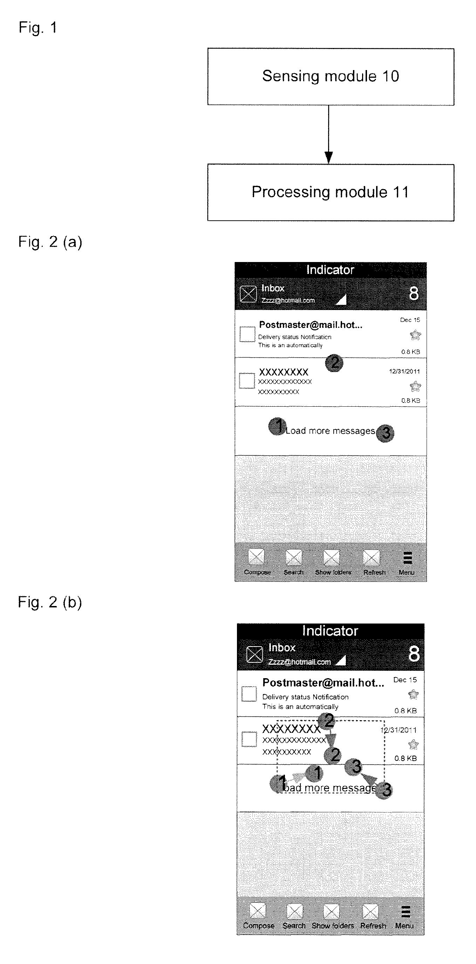

An embodiment of the present disclosure provides a smart terminal with a built-in screenshot function. As shown in Fig. 1, the smart terminal includes: a sensing module 10 and a processing module 11, wherein
the sensing module 10 is configured to sense a touch of a user to form a coordinate of a touch point, and send the formed coordinate of the touch point to the processing module 11; and
the processing module 11 is configured to receive the coordinate of the touch point, and process the coordinate of the touch point to form a capture area and capture the capture area.

Here, the smart terminal takes a smart phone as an example. At present, touch screens of most smart mobile phones apply capacitive touch screens. A capacitive touch screen not only supports a single touch, but also supports multiple touches. Since a capacitive touch screen is provided with a sensing matrix, a smart mobile phone applying a capacitive touch screen is able to sense a coordinate of a touch point.

The embodiment of the present disclosure may be applied when two or more fingers are used by a user. The user uses two or more fingers to perform a capture action. For example, two or more fingers pinch the capture area and the capture area is captured when a capture action of the fingers is detected.

In the present embodiment, the embodiment of the present disclosure will be further described by taking usage of three fingers by the user as an example and in combination with Fig. 2 (a) to Fig. 2 (c).

The user uses three fingers to touch a screen content that the user is interested in on a touch screen of a smart mobile phone to form a touch point 1, a touch point 2 and a touch point 3 as shown in Fig. 2 (a). The smart mobile phone, which applies a capacitive touch screen, is provided with a sensing matrix, thus the sensing module 10 is able to sense locations of the touch point 1, the touch point 2 and the touch point 3 to form a coordinate (x1, y1) of the touch point 1, a coordinate (x2, y2) of the touch point 2 and a coordinate (x3, y3) of the touch point 3. The sensing module 10 sends the coordinates of the three touch points to the processing module 11.

The processing module 11 receives the coordinate (x1, y1) of the touch point 1, the coordinate (x2, y2) of the touch point 2 and the coordinate (x3, y3) of the touch point 3 and determines a capture area by comparing the abscissa values and the ordinate values of the coordinates of the three touch points.

Here, as shown in Fig. 2 (a), the sensing module 10 selects a point on the bottom left of the screen of the smart mobile phone as an origin of coordinates to establish a coordinate system XY, then the sensing module 10 determines that the whole screen of the smart mobile phone is located in a first quadrant of the coordinate system XY, which means that the abscissa values and the ordinate values of the coordinates of the touch points sensed by the sensing module 10 are all positive values.

The operation that the processing module 11 determines the capture area by comparing the abscissa values and the ordinate values of the coordinates of the three touch points may specifically include the following steps:
the processing module 11 may compare the abscissa value x1 of the coordinate of the touch point 1, the abscissa value x2 of the coordinate of the touch point 2 and the abscissa value x3 of the coordinate of the touch point 3, to obtain that x1<x2<x3 in combination with Fig. 2 (a);
the processing module 11 may compare the ordinate value y1 of the coordinate of the touch point 1, the ordinate value y2 of the coordinate of the touch point 2 and the ordinate value y3 of the coordinate of the touch point 3, to obtain that y3<y1<y2 in combination with Fig. 2 (a);
the processing module 11 extracts a maximum value and a minimum value from the abscissas of the coordinates of the three touch points. Here, the maximum abscissa value x3 and the minimum abscissa value x1 are extracted. The minimum abscissa value x1 is subtracted from the maximum abscissa value x3 to obtained a first difference value X=x3-x1;

The processing module 11 extracts a maximum value and a minimum value of the ordinates of the coordinates of the three touch points. Here, the maximum ordinate value y2 and the minimum ordinate value y3 are extracted. The minimum ordinate value y3 is subtracted from the maximum ordinate value y2 to obtain a second difference value Y=y2-y3.

In parallel to the abscissa axis of the coordinate system, the processing module 11 makes, passing through the touch point 3, a line segment M1 having a length equal to the first difference value X while making, passing through the touch point 2, a line segment M2 having a length equal to the first difference value X.

In parallel to the ordinate axis, the processing module 11 makes, passing through the touch point 1, a line segment N1 having a length equal to the second difference value Y while making, passing through the touch point 3, a line segment N2 having a length equal to the second difference value Y.

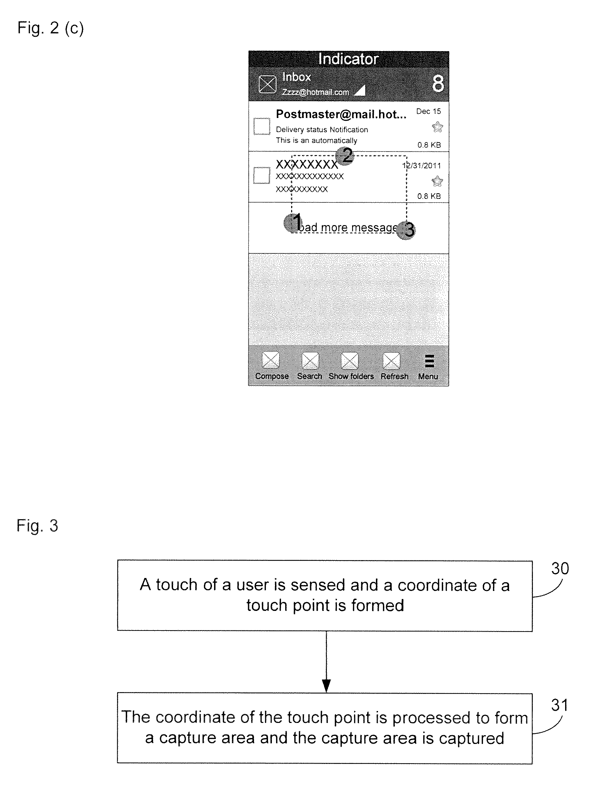

A closed area enclosed by the line segments M1, M2, N1 and N2 is the capture area, as illustrated by the dotted box in Fig. 2 (b). As shown in Fig. 2 (b), the user uses three fingers to pinch the capture area and captures the capture area when the pinching operation is detected. A screen content that is captured finally is as shown in Fig. 2 (c), wherein the capture operation may be the pinching operation.

In the present embodiment, the user uses three fingers to touch the smart mobile phone, or may also use two fingers, four finger or five fingers. A formed capture area is a rectangle, or may be also a triangle, a square or any other irregular shapes, as long as the formed capture area is able to include the screen content that the user is interested in.

Based on the smart terminal with a built-in screenshot function, an embodiment of the present disclosure further provides a method for implementing a smart terminal with a built-in screenshot function. As shown in Fig. 3, the method includes the following steps:
step 30: a touch of a user is sensed to form a coordinate of a touch point; and
step 31: the coordinate of the touch point is processed to form a capture area and the capture area is captured.

Here, the smart terminal with a built-in screenshot function includes a sensing module and a processing module, wherein the sensing module senses the touch of the user, forms a coordinate of the touch point and sends the formed coordinate of the touch point to the processing module. The processing module receives the coordinate of the touch point, and processes the coordinate of the touch point to form the capture area. Subsequently, the user captures the capture area by applying a capture action. The capture area is captured when a capture operation of a finger is detected. The capture action may be pinching by a finger.

The operation that the processing module processes the coordinate of the touch point includes that the capture area is determined by comparing the abscissa values and the ordinate values of coordinates of all touch points.

Usage of three fingers by the user is taken as an example in the present embodiment. The user uses three fingers to touch a screen content that the user is interested in on a touch screen of a smart mobile phone to form a touch point 1, a touch point 2 and a touch point 3 as shown in Fig. 2 (a). The smart mobile phone, which applies a capacitive touch screen, is provided with a sensing matrix, thus the sensing module is able to sense locations of the touch point 1, the touch point 2 and the touch point 3 to form a coordinate (x1, y1) of the touch point 1, a coordinate (x2, y2) of the touch point 2 and a coordinate (x3, y3) of the touch point 3. The sensing module sends the coordinates of the three touch points to the processing module.

Here, the sensing module selects a point on the bottom left of the screen of the smart mobile phone as an origin of coordinates to establish a coordinate system XY, then the sensing module considers that the whole screen of the smart mobile phone is located in a first quadrant of the coordinate system XY, which means that the abscissa values and the ordinate values of the coordinates of the touch points sensed by the sensing module are all positive values.

The processing module 11 receives coordinate (x1, y1) of the touch point 1, the coordinate (x2, y2) of the touch point 2 and the coordinate (x3, y3) of the touch point 3, and performs the following process:
the processing module compares the abscissa value x1 of the coordinate of the touch point 1, the abscissa value x2 of the coordinate of the touch point 2 and the abscissa value x3 of the coordinate of the touch point 3, to obtain that x1<x2<x3 in combination with Fig. 2 (a):
the processing module compares the ordinate value y1 of the coordinate of the touch point 1, the ordinate value y2 of the coordinate of the touch point 2 and the ordinate value y3 of the coordinate of the touch point 3, to obtain that y3<y1<y2 in combination with Fig. 2 (a);
the processing module extracts a maximum value and a minimum value of the abscissas of the coordinates of the three touch points. Here, the maximum abscissa value x3 and the minimum abscissa value x1 are extracted. The minimum abscissa value x1 is subtracted from the maximum abscissa value x3 to obtain a first difference value X=x3-x1;
the processing module extracts a maximum value and a minimum value of the ordinates of the coordinates of the three touch points. Here, the maximum ordinate value y2 and the minimum ordinate value y3 are extracted. The minimum ordinate value y3 is subtracted from the maximum ordinate value y2 to obtain a second difference value Y=y2-y3.

In parallel to the abscissa axis of the coordinate system, the processing module makes, passing through the touch point 3, a line segment M1 having a length equal to the first difference value X while making, passing through the touch point 2, a line segment M2 having a length equal to the first difference value X.

In parallel to the ordinate axis, the processing module makes, passing through the touch point 1, a line segment N1 having a length equal to the second difference value Y while making, passing through the touch point 3, a line segment N2 having a length equal to the second difference value Y.

The capture area is a closed area enclosed by the line segments M1, M2, N1 and N2, as illustrated by the dotted box in Fig. 2 (b). As shown in Fig. 2 (b), the user uses three fingers to pinch the capture area and captures the capture area when pinching operation is detected. A screen content that is captured finally is as shown in Fig. 2 (c).

In the present embodiment, the user uses three fingers to touch the smart mobile phone, or may also use two fingers, four finger or five fingers. A formed capture area is a rectangle, or may be also a triangle, a square or other irregular shapes, as long as the formed capture area is able to include the screen content that the user is interested in.

The above are only preferred embodiments of the present disclosure, and are not used for limiting the protection scope of the present disclosure.

### INDUSTRIAL APPLICABILITY

According to a smart terminal with a built-in screenshot function and an implementation method thereof provided by the embodiments of the present disclosure a user touches a screen content of interest, the smart terminal senses the touch, generates a coordinate of a touch point and processes the coordinate of the touch point to form a capture area to further capture the screen content that the user is interested in. By using a technical solution of the present disclosure, it is not necessary to remember a button combination or capture a screen content in a full-screen display situation, thereby facilitating an operation of a user.

## Claims

1. A smart terminal with a built-in screenshot function, the smart terminal comprising a sensing module and a processing module, wherein
the sensing module is configured to sense a touch of a user to form a coordinate of a touch point, and send the coordinate of the touch point to the processing module; and
the processing module is configured to receive the coordinate of the touch point, and process the coordinate of the touch point to form a capture area and capture the capture area.

2. The smart terminal with a built-in screenshot function according to claim 1, wherein a screen of the smart terminal applies a capacitive touch screen.

3. The smart terminal with a built-in screenshot function according to claim 1 or 2, wherein the processing module is configured to receive coordinates of all touch points, and determine the capture area by comparing abscissa values and ordinate values of the coordinates of all touch points.

4. The smart terminal with a built-in screenshot function according to claim 3, wherein the processing module is configured to:
receive the coordinates of all touch points, compare the abscissa values and the ordinate values of the coordinates of all touch points, acquire a maximum abscissa value and a minimum abscissa value, as well as a maximum ordinate value and a minimum ordinate value in the coordinates of all touch points, subtract the minimum abscissa value from the maximum abscissa value to acquire a first difference value and subtract the minimum ordinate value from the maximum ordinate value to acquire a second difference value, wherein the capture area is formed by a closed area enclosed by two line segments made according to a length equal to the first difference value and two line segments made according to a length equal to the second difference value, and the capture area is captured.

5. The smart terminal with a built-in screenshot function according to claim 1 or 4, wherein capturing the capture area comprises capturing the capture area when a capture operation of a finger is detected.

6. A method for implementing a smart terminal with a built-in screenshot function, comprising:
sensing a touch of a user to form a coordinate of a touch point; and
processing the coordinate of the touch point to form a capture area and capturing the capture area.

7. The method for implementing a smart terminal with a built-in screenshot function according to claim 6, wherein processing the coordinate of the touch point comprises:
determining the capture area by comparing abscissa values and ordinate values of coordinates of all touch points.

8. The method for implementing a smart terminal with a built-in screenshot function according to claim 7, wherein processing the coordinate of the touch point to form the capture area comprises:
comparing the abscissa values and the ordinate values of the coordinates of all touch points, acquiring a maximum abscissa value and a minimum abscissa value, as well as a maximum ordinate value and a minimum ordinate value in the coordinates of all touch points, subtracting the minimum abscissa value from the maximum abscissa value to acquire a first difference value and subtracting the minimum ordinate value from the maximum ordinate value to acquire a second difference value, and forming the capture area by a closed area enclosed by two line segments made according to a length equal to the first difference value and two line segments made according to a length equal to the second difference value.

9. The method for implementing a smart terminal with a built-in screenshot function according to claim 6, 7 or 8, wherein a screen of the smart terminal applies a capacitive touch screen.

10. The method for implementing a smart terminal with a built-in screenshot function according to claim 6, wherein capturing the capture area comprises capturing the capture area when a capture operation of a finger is detected.
